# EUROPEAN PATENT APPLICATION

(11) **EP 0 818 927 A2**
(43) Date of publication of application: **14.01.1998**
(21) Application number: 97304980.2
(22) Date of filing: 08.07.1997
(51) Int. Cl.: H04N 7/14

(54) **Method and apparatus for controlling use of a telephone line**

(30) Priority: 08.07.1996 KR 9627519
(71) Applicant: Samsung Electronics Co., Ltd., Suwon-city, Kyungki-do (KR)
(72) Inventor: Lee, Surg-June, Sucho-ku, Seoul (KR)
(74) Representative: Tunstall, Christopher Stephen

(57) **Abstract**

A visual telephone system is disclosed which comprises means for determining whether a telephone line is busy, means for transmitting and receiving video and voice signals so as to perform visual telephone communication via the telephone line if a communication request is received and the telephone line is determined not to be busy and means for presenting a message if the telephone line is determined to be busy. A method of controlling a visual telephone system is also described.

## Description

### Background to the Invention

The present invention relates to a visual telephone system, and more particularly to a method and apparatus for controlling the use of a telephone network line which is being connected with a telephone network or a switching system.

Generally, there may be a number of telephone sets connected to a single telephone network line which has a specific call number.

Visual telephones may be connected to such a signal transmission line (ie a telephone network line) so as to transmit and receive audio (ie voice) and visual (ie video) information to/from another visual telephone via the telephone network line. If the communication of information between calling and called visual telephones over the telephone network line is achieved by an analog system, audio communication is possible, but visual communication is impossible. This is because audio and visual signals must be simultaneously transmitted and received between the calling and called visual telephones. Thus, so as the audio signal is transmitted and received simultaneously with the visual signal via a telephone network line, each visual telephone must include a modem device for converting analog information which contains audio and visual signals into digital information.

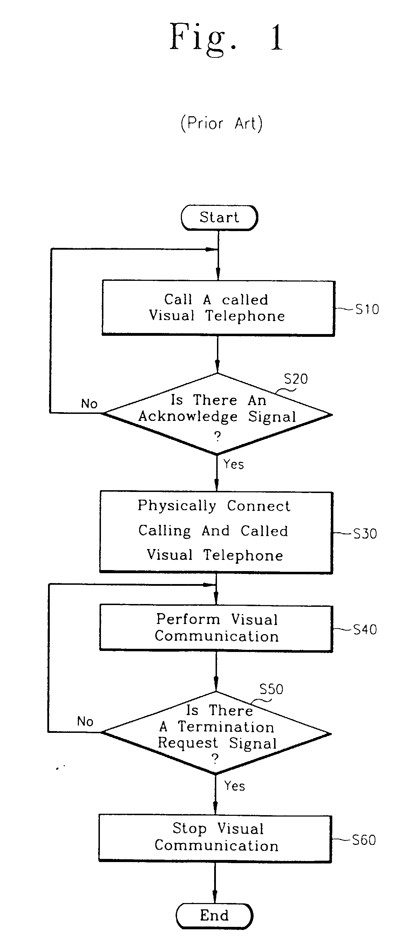

FIG. 1 is a flowchart illustrating a conventional method of performing visual communication via a telephone network line between calling and called visual telephones, each of which has a modem device. As shown in the drawing, the conventional method comprises the steps of calling the called visual telephone via the telephone network line by key-inputting the call number thereof (S10), determining whether or not an acknowledge signal is generated from the called visual telephone (S20), physically connecting, if so, the calling visual telephone to the called visual telephone (S30), performing visual communication of the calling visual telephone with the called visual telephone (S40), determining whether or not there is a termination request signal from the calling or the called visual telephone (S50), and terminating, if so, the visual communication of the calling visual telephone with the called visual telephone (S60).

During the visual communication of a calling visual telephone with a called visual telephone via a telephone network line, when another visual or audio telephone connected with the telephone network line is off-hooked by a caller, the visual communication is stopped because noise is introduced into the telephone network line.

So as to solve this problem, a LED (light emitting diode) is installed on the body of a visual telephone connected to the telephone network so as to indicate whether or not another visual telephone is being connected with the telephone network line. However, even though the LED installed on the visual telephone is turned on, when another visual telephone which is commonly connected with the telephone network line is involuntary off-hooked by a caller, the visual communication of the visual telephone with another visual telephone is stopped because of the introduction of noise.

### Summary of the Invention

According to the present invention, there is provided a visual telephone system comprising:
means for determining whether a telephone line is busy;
means for transmitting and receiving video and voice signals so as to perform visual telephone communication via the telephone line if a communication request is received and the telephone line is determined not to be busy; and
means for presenting a message if the telephone line is determined to be busy.

Preferably, the means for determining whether the telephone line is busy is adapted to generate a line state detection signal; and the means for transmitting and receiving video and voice signals and the means for presenting a message are adapted to operate in response to the line state detection signal.

Preferably, the visual telephone system further comprises:
a second switch for disconnecting the telephone line and the visual telephone in response to a switch on/off control signal; and
means for generating the switch on/off control signal in response to the line state detection signal.

The present invention also provides a method of controlling a visual telephone system comprising:
detecting a communication request;
determining whether a telephone line is busy;
transmitting and receiving video and voice signals so as to perform visual telephone communication via the telephone line when the communication request is received and the telephone line is determined not to be busy; and
presenting a message when the telephone line is determined to be busy.

Preferably, the method further comprises:
disconnecting the visual telephone system from the telephone line when the telephone line is determined to be busy; and
reconnecting the visual telephone system to the telephone line when the communication request is received and the telephone line is determined not to be busy.

The invention preferably provides a visual telephone system and a method of controlling same that, during the connection of another visual telephone with a telephone network, is capable of blocking the connection of the visual telephone system to the telephone network and displaying a message so as to notify a caller that the visual telephone system cannot be utilized.

The invention preferably provides a visual telephone system and a method of controlling same that, during visual communication of one visual telephone with another visual telephone over a telephone network, is capable of blocking the connection of the visual telephone system to the telephone network and displaying a message so as to notify a caller that the visual telephone system cannot be utilized.

### Brief Description of the Drawings

The present invention will now be described by way of example with reference to the accompanying drawings.

FIG. 1 is a flowchart illustrating a conventional method of performing visual communication via a telephone network line between calling and called visual telephone systems.

FIG. 2 is a block diagram of a visual telephone system according to an embodiment of the present invention.

FIG. 3 is a detailed block diagram of the detecting unit shown in FIG. 2.

FIG. 4 is a flowchart illustrating a method of controlling the use of the telephone network in the visual telephone system of FIG. 2.

FIG. 5 is a flowchart illustrating the process steps for detecting a busy state of the telephone network line where the detecting unit shown in FIG. 2 is composed of a microcomputer.

FIG. 6 is a block diagram of a visual telephone system according to another embodiment of the present invention.

FIG. 7 is a flowchart illustrating a method of controlling the use of the telephone network in the visual telephone system of FIG. 6

### Detailed Description of Preferred Embodiments

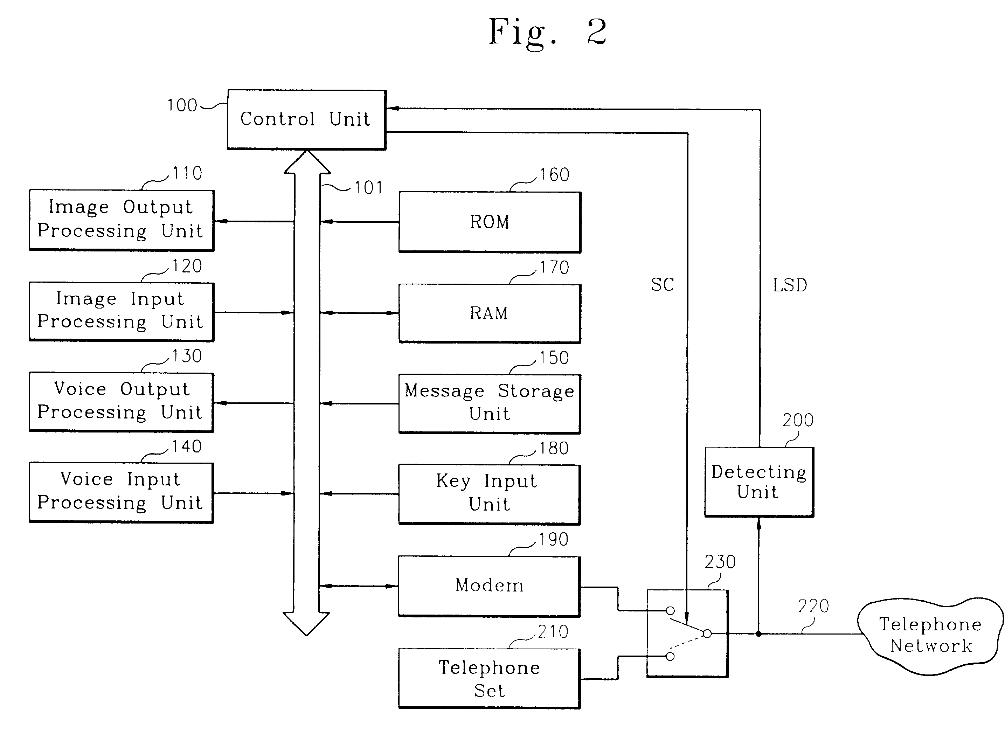

Referring to FIG. 2, a visual telephone system in accordance with the present invention is shown. The system includes a detecting unit 200 for detecting whether a telephone network line 220 is busy and generating a line state detection signal LSD. A control unit 100 is provided for performing a control routine in response to the line state detection signal LSD. A switch is provided for connecting the telephone network 220 line to either a modem 190 or a telephone set 210 by means of a control signal from the control unit 200. A message storage unit 150 is provided for storing a message.

With the control routine to be executed in control unit 100, the visual telephone system of the invention can control the use of the telephone network line 220 according to whether or not the line is busy. The control unit 100 is also provided to control the whole operation of the visual telephone system.

The telephone network line 220 is connected to a telephone network. Accordingly, the visual telephone system is capable of detecting whether or not the telephone network line 220 is busy and controlling the use of the telephone network line 220. If the telephone network line 220 is busy, for instance when the telephone network line 220 is being used by another telephone set or another visual telephone system commonly connected with it, the visual telephone system according to the present invention is not connected to the telephone network line 220 so as not to communicate with a called telephone or a called visual telephone over the telephone network line 220. If the telephone network line is not busy, the visual telephone system is electrically connected to the telephone network line so as to communicate with the called telephone or the called visual telephone.

Referring again to FIG. 2, the visual telephone system further comprises an image output processing unit 110 (eg a monitor), an image input processing unit 120 (eg, a CCD camera), a voice output processing unit 130 (eg a sound card), a voice input processing unit 140 (eg a mike), a key unit 180 (eg a key matrix) and a memory section. This memory section comprises a RAM (random access memory) 170 and a ROM (read only memory) 160. The control unit 100 executes control programmes stored in the ROM so as to control the whole operation of the visual telephone system.

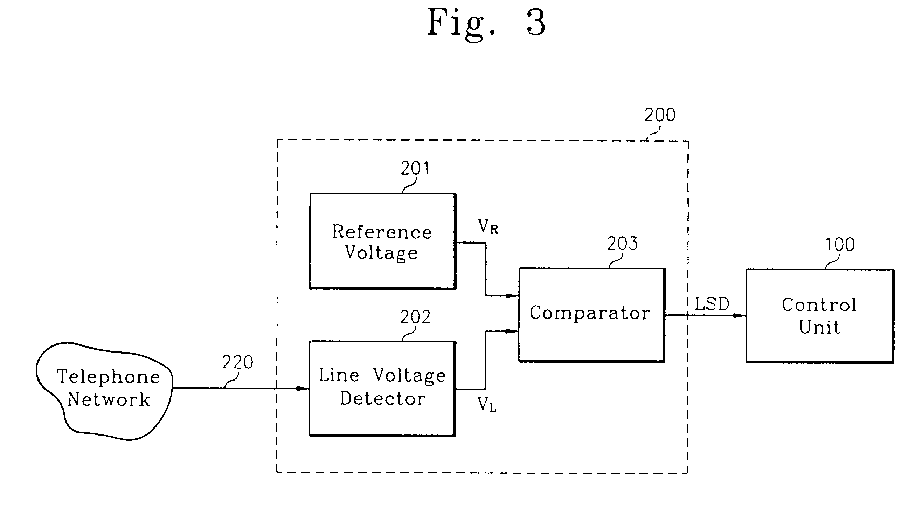

The detecting unit 200 is connected between the control unit 100 and the telephone network line 220 so as to detect whether or not the line is busy. The detecting unit 200 comprises, as shown in FIG. 3, a line voltage detector 202 for detecting a voltage V_{L} of the telephone network line 220, a reference voltage generator 201 for generating a reference voltage V_{R} corresponding to the voltage applied to the telephone network line 220 in a busy state, a comparator for comparing the detected voltage V_{L} with the reference voltage V_{R} to generate the line state detection signal LSD and provide it to the control unit 100. The line state detection signal LSD indicates whether or not the telephone network line 220 is busy. The telephone network line 220 is applied with about 40 to 50 volts when it is not in a busy state, and its voltage is dropped to about 10 volts when it is in a busy state. By utilizing the drop in telephone line voltage, the detecting unit 200 is capable of generating the line state detection signal LSD.

Additionally, when the telephone network line 220 is in a busy time state, the control unit 100 provides a control signal through a system bus 101 (see FIG. 2) to the message storage unit 150. At this time, a message is read out from the message storage unit 150 in response to the control signal and provided to the monitor and/or the sound card of the visual telephone system. That message may be, for instance, "Please note that you cannot use the telephone network line now". Thus, a subscriber can recognise whether or not the telephone network line is busy.

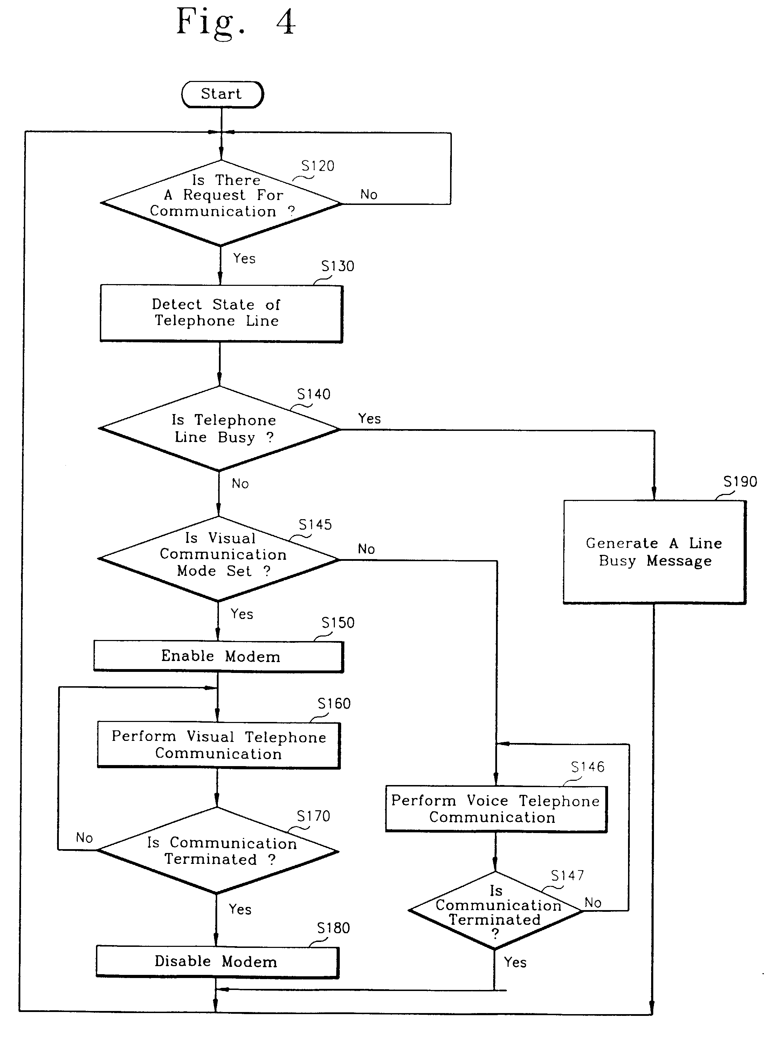

Now, a method for controlling the use of a telephone network line which is being connected with a telephone network or a switching system will be described with reference to FIG. 4. A control programme for performing the method which is stored in the ROM 160 of the visual telephone system shown in FIG. 2 and is executed by means of the control unit 100. The visual telephone system in FIG. 2 is capable of controlling the use of the telephone network line in accordance with the detected state, busy or not, of the line.

Firstly, it is determined at step S120 whether there is a request for communication in the visual telephone system. If the call number of a subscriber is input by the key input unit 180 of the system, the control unit 100 generates a hook-off signal in response to the call number and provides the hook-off signal to the modem 190. The modem 190 is in a stand-by state for dialling and the control unit 100 recognizes the stand-by state of the modem 190 as the request for the communication.

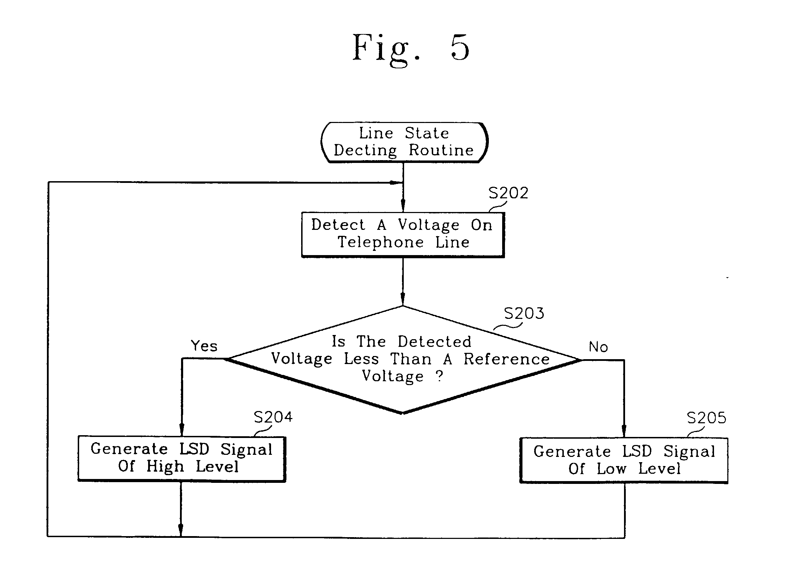

At step S130, the detecting unit 200 detects a state of the telephone network line 220 in accordance with a line state detecting routine shown in FIG. 5 and generates a line state detection signal LSD indicating whether or not the line 220 is busy. The line state detecting routine of FIG. 5 is performed in a microcomputer which constitutes the detecting unit 200. As shown in FIG. 5, the detecting unit 200 of the microcomputer detects a voltage on the telephone network line 220 (steps S202) and compares the detected voltage with a reference voltage (step S203). If the detected voltage is less than the reference voltage, the detecting unit 200 generates a line state detection signal of high level (step S204). If not, the detecting unit 200 generates a line state detection signal of low level (step S205). In this embodiment, a line state detection signal of high level indicates that the telephone network line 220 is in a busy state, and a line state detection signal of low level indicates that the telephone network line 220 is not in a busy state.

Alternatively, the line state detection signal can be detected by the detecting unit 200 which is composed of the reference voltage generator 201, the line voltage detector 202 and the comparator 203, as shown in FIG. 3.

Turning to FIG. 4, in step S140, if the line state detection signal is at a high level, ie when the telephone network line 220 is busy, the control proceeds to step S190, in which a line busy message is read out from the message storage unit 150 by means of the control of the control unit 100 and provided to the monitor and/or the sound card of the visual telephone system. Thus, the line busy message indicating that the telephone network line 220 is in a busy state may be generated by the sound card as a voice and/or by display on the monitor.

Alternatively, in step S140, if the line state detection signal is at a low level, ie when the telephone network line 220 is not busy, the control proceeds to step S145, in which it is determined whether or not a visual communication mode is set by a subscriber. If the visual communication mode is set ie if a switch control signal SC is generated from the control unit 100 in accordance with a specific key entry through the key input unit 180, the control proceeds to step S150 in which the switch 230 is controlled in response to the switch control signal SC to allow the modem 190 to be connected to the telephone network line 220 and at the same time the control unit 100 enables the modem to be activated. The activation of the modem 190 means that a dialling tone signal is generate on the basis of the call number. Next, at step S160, the visual telephone system performs visual telephone communication.

At step S170, it is determined whether the communication is terminated. If so, the control proceeds to step S180, in which the control unit 100 disables the modem so as to be inactivated. If not, the control jumps to step S160 so that the visual telephone communication continues to be performed.

On the other hand, at step S145, if the visual communication mode is not set, ie when a voice communication mode is set, the control proceeds to step S146 wherein the switch 230 is controlled in response to the switch control signal SC to allow the telephone set 210 to be connected to the telephone network line 220 and at the same time a voice telephone communication is performed. Next, at step S147, it is determined whether the voice telephone communication is terminated. If so, the control jumps to step S120, and if not, the control jumps to step S146 so that the voice telephone communication continued to be performed.

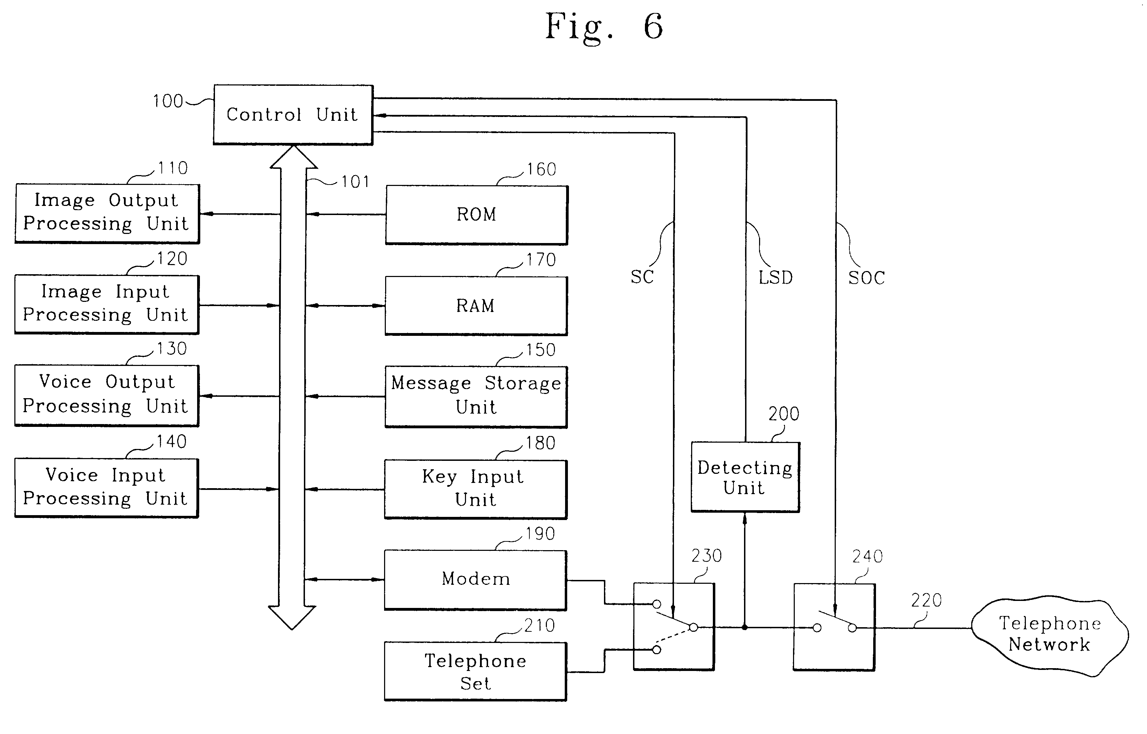

FIG. 6 shows, in a block diagram, the circuit construction of a visual telephone system according to another embodiment of the present invention.

The visual telephone system in FIG. 6 has the same construction as that of FIG. 2 except that another switch 240 is connected between the switch 230 and the telephone network line 220 so that electrical connection between them is controlled by means of the control of the control unit 102.

The detecting unit 200 detects that the telephone network line 220 is in a busy state, and then generates a line state detection signal LSD, so that the control unit 100 generates a switch on/off control signal SOC in response to the line state detection signal LSD. At this time, for instance, when the telephone network line 220 is busy, the telephone network line 220 and the switch 230 is disconnected by the switch 240 controlled in response to the switch on/off control signal SOC.

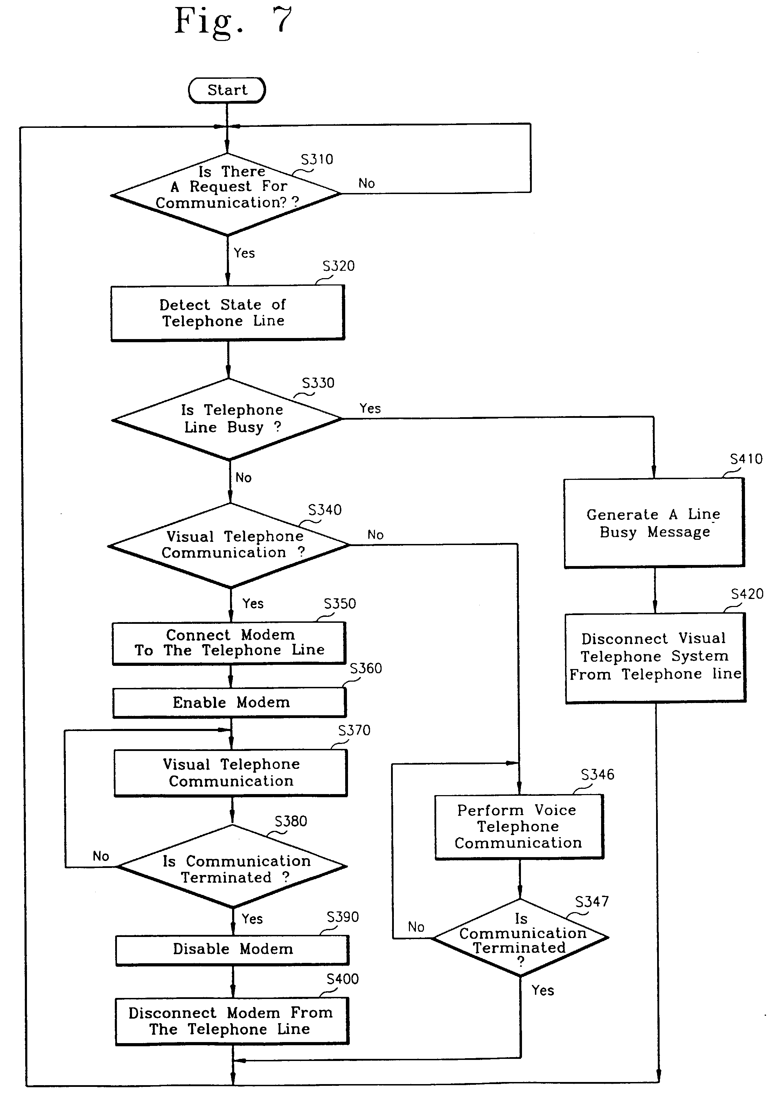

FIG. 7 shows, in a flowchart form, a method for controlling the use of the telephone network line 220 which is being connected with a telephone network or a switching system.

The method of FIG. 7 has the same steps as that of FIG. 4 except that, after the modem 180 is disabled, the telephone set 210 is connected to the telephone network line 220, and after the line busy message is generated from the message storage unit 150, the visual telephone network is disconnected from the telephone network line 220 by the switch 240 controlled in response to the switch on/off control signal SOC from the control unit 100.

Referring to FIG. 7, in step S320 it is determined whether there is a request for communication in the visual telephone system. If the call number of a subscriber is input by the key input unit 180 of the system, the control unit 100 generates a hook-off signal in response to the call number and provides the hook-off signal to the modem 190. The modem 190 is in a stand-by state for dialling and the control unit 100 recognizes the stand-by state of the modem 190 as the request for communication.

In step S330, the detecting unit 200 detects a state of the telephone network line 220 in accordance with the line state detecting routine shown in FIG. 5 and generates a line state detection signal LSD indicating whether or not the line 220 is busy. The line state detecting routine of FIG. 5 is performed in a micro-computer which constitutes the detecting unit 200. As shown in FIG. 5, the detecting unit 200 detects a voltage on the telephone network line 220 (step S202) and compares the detected voltage with a reference voltage (step S203). If the detected voltage is less than the reference voltage, the detecting unit 200 generates a line state detection signal of high level (step S204). If not, the detecting unit 200 generates a line state detection signal of low level (step S205). Herein, the line state detection signal of high level indicates that the telephone network line 220 is a busy state, and the line state detection signal of low level indicates that the telephone network line 220 is not in a busy state.

Turning to FIG. 7, in step S330, if the line state detection signal is at high level, ie when the telephone network line 220 is busy, the control proceeds to step S410, in which a line busy message is read out from the message storage unit 150 by means of the control of the control unit 100 and provided to the monitor and/or the sound card of the visual telephone system. Thus, the line busy message indicating that the telephone network line 220 is in a busy state may be generated by the sound card in a voice and/or by displayed on the monitor. The control proceeds to step S420, in which the switch 240 is controlled in response to the switch on/off control signal SOC from the control unit 100 so that the visual telephone system, particularly, the switch 230 is disconnected with the telephone network line 220.

Alternatively, in step S330, if the line state detection signal is at a low level, ie when the telephone network line 220 is not busy, the control proceeds to step S340, in which it is determined whether or not a visual communication mode is set by a subscriber. If the visual communication mode is set ie, if a switch control signal SC is generated from the control unit 100 in accordance with a specific key entry through the key input unit 180, the control proceeds to step S350 in which the switch 230 is controlled in response to the switch control signal SC to allow the modem 190 to be connected to the telephone network line 220. Next, the control proceeds to step S360, in which the control unit 100 enables the modem 190 to be activated. The activation of the modem 190 means that a dialling tone signal is generated on the basis of the call number. Next, at step S370, the visual telephone system performs visual telephone communication.

At step S380, it is determined whether the communication is terminated. If so, the control proceeds to step S390, in which the control unit 100 disables the modem to render it inactive. If not, the control jumps to step S370 so that the visual telephone communication continues to be performed.

On the other hand, in step S340, if the visual communication mode is not set, ie when a voice communication mode is set, the control proceeds to step S346 in which the switch 230 is controlled in response to the switch control signal SC to allow the telephone set 210 to be connected to the telephone network line 220 and at the same time voice telephone communication is performed. Next, in step S347, it is determined whether voice telephone communication is terminated. If so, the control jumps to step S310, and if not, the control jumps to step S346 so that the voice telephone communication continues to be performed.

As described above, in the visual telephone system of the present invention, when a subscriber using the system tries to call another subscriber via a telephone network, the system is connected to the telephone network line in accordance with whether or not the line is busy. If the line is busy, the system is not connected to the line so that it cannot perform visual communication. If the line is not busy, the system is connected to the line so as to perform visual communication. Therefore, during a busy state of the telephone network, the visual telephone system is capable of blocking connection to the telephone network and outputting a message so as to notify a caller that the visual telephone system cannot be utilized.

## Claims

1. A visual telephone system comprising:
means for determining whether a telephone line is busy;
means for transmitting and receiving video and voice signals so as to perform visual telephone communication via the telephone line if a communication request is received and the telephone line is determined not to be busy; and
means for presenting a message if the telephone line is determined to be busy.

2. A visual telephone system according to claim 1 in which:
the means for determining whether the telephone line is busy is adapted to generate a line state detection signal; and
the means for transmitting and receiving video and voice signals and the means for presenting a message are adapted to operate in response to the line state detection signal.

3. A visual telephone system according to claim 2 in which the means for determining whether the telephone line is busy comprises:
a reference voltage generator;
means for detecting the voltage on the telephone line; and
means for comparing the voltage detected with the reference voltage to generate the line state detection signal.

4. A visual telephone system according to claim 3 in which the means for determining whether the telephone line is busy comprises a microprocessor which is adapted to detect the voltage on the telephone network line, comparing the voltage detected with a preset reference voltage and generate the line state detection signal.

5. A visual telephone system according to any one of claims 2-4 in which the means for transmitting and receiving video and voice signals comprises a modem and means for enabling the modem in response to the line state detection signal.

6. A visual telephone system according to any one of claims 2-5 further comprising:
a second switch for disconnecting the telephone line and the visual telephone in response to a switch on/off control signal; and
means for generating the switch on/off control signal in response to the line state detection signal.

7. A visual telephone system according to any preceding claim further comprising means for generating a switch control signal in response to a specific key entry.

8. A visual telephone system according to claim 7 further comprising a switch for connecting the telephone line to either the modem or a telephone hand set of the visual telephone system in dependence upon the switch control signal.

9. A visual telephone system according to any preceding claim in which the means for presenting a message comprises a message storage unit for storing a message and presenting the message on a display or a speaker in response to the line state detection signal.

10. A method of controlling a visual telephone system comprising:
detecting a communication request;
determining whether a telephone line is busy;
transmitting and receiving video and voice signals so as to perform visual telephone communication via the telephone line when the communication request is received and the telephone line is determined not to be busy; and
presenting a message when the telephone line is determined to be busy.

11. A method according to claim 10 comprising:
determining whether a visual communication mode is selected;
performing voice telephone communication when the communication request is received, the telephone line is determined not to be busy and the visual communication mode is not set; and
transmitting and receiving video and voice signals so as to perform visual telephone communication via the telephone line when the communication request is received, the telephone line is determined not to be busy and the visual communication mode is set.

12. A method according to claim 10 or claim 11 comprising:
disconnecting the visual telephone system from the telephone line when the telephone line is determined to be busy; and
reconnecting the visual telephone system to the telephone line when the communication request is received and the telephone line is determined not to be busy.

13. A visual telephone system as described herein with reference to and as illustrated in FIGs. 2 et seq. of the accompanying drawings.

14. A method of controlling a visual telephone system as described herein with reference to and as illustrated in FIGs. 2 et seq. of the accompanying drawings.
